# FASCICULE DE BREVET EUROPEEN

(11) **EP 0 532 590 B1**
(45) Date de publication et mention de la délivrance du brevet: **27.07.1994**
(21) Numéro de dépôt: 91910775.5
(22) Date de dépôt: 29.05.1991
(51) Int. Cl.: G03B 27/58, B65H 16/02

(54) **EMBALLAGE DE PRODUITS PHOTOGRAPHIQUES EN BANDES**
VERPACKUNG FÜR PHOTOGRAPHISCHE BANDMATERIALIEN
PACKAGING FOR PHOTOGRAPHIC STRIPS

(30) Priorité: 08.06.1990 FR 9007375
(43) Date de publication de la demande: 24.03.1993
(73) Titulaire: KODAK-PATHE, F-75594 Paris Cedex 12 (FR); EASTMAN KODAK COMPANY, Rochester, New York 14650-2201 (US)
(72) Inventeur: THIBERT, Daniel Gérard, F-71102 Chalon-sur-Saône Cédex (FR); PERIER, Henry, F-71102 Chalon-sur-Saône Cédex (FR)
(74) Mandataire: Buff, Michel
(86) Numéro de dépôt international: FR9100420
(87) Numéro de publication internationale: WO9119222

(56) Documents cités:
- EP-A- 0 214 928
- DE-C- 599 354
- FR-A- 1 551 085
- US-A- 4 864 362

## Description

L'invention est relative au conditionnement de produits en bandes et plus particulièrement au conditionnement de produits photographiques en bandes de très grandes longueurs (supérieure à 1 000 m).

Dans la demande de brevet français 9001858 déposée par la demanderesse le 12 février 1990, on a proposé un emballage collectif dans lequel on dispose des rouleaux de produits photographiques en bandes sur une broche en porte à faux conçue de manière à immobiliser l'ensemble des rouleaux lors du déplacement dudit emballage.

Bien que cet emballage soit avantageux par rapport à ceux utilisés actuellement car il permet d'emballer des bandes de grande dimension, il nécessite encore un local pouvant être totalement obscurci pour transférer les bandes dans le dispositif d'utilisation par exemple une tireuse photographique.

On connait des emballages pour bandes photographiques individuelles munis d'une fente étanche à la lumière par laquelle on extrait le film. De tels types d'emballages, appelés chargeurs, sont décrits par exemple dans les documents EP-A-214 928, US-A-4 741 439 et US-A-3 315 910. Ces chargeurs permettent une utilisation aisée des tireuses photographiques puisqu'on n'a plus besoin de local pouvant être mis à l'obscurité totale. Toutefois, compte tenu du poids qui doit rester raisonnable pour permettre une manipulation aisée, les longueurs de rouleaux sont limitées et on a besoin de renouveler fréquemment les chargeurs. De plus, dans ces emballages la bande risque de se dérouler pendant le transport puisque le mandrin sur lequel on enroule le produit photosensible n'est pas immobilisé en rotation.

Le document FR-A-1 551 085 décrit un dispositif pour bobiner ou débobiner des bandes de papier. Dans ce document, on utilise un arbre unique pour supporter plusieurs rouleaux, toutefois le dispositif décrit n'est pas un emballage. De plus, l'immobilisation des rouleaux sur l'arbre ne peut être obtenue facilement de l'extérieur si l'on dispose l'arbre dans une enveloppe étanche à la lumière.

L'invention a pour objet de fournir un emballage de très grande capacité de produit en bande, pouvant dépasser 1 000 m².

L'invention a aussi pour objet de fournir un emballage réutilisable susceptible de recevoir plusieurs rouleaux présentant une largeur relativement étroite par exemple 95 mm, 102 mm, 127 mm ou plus et une longueur pouvant être supérieure à 1 000 m.

L'invention a encore pour objet un emballage d'utilisation aisée que l'on ne jette pas après usage évitant ainsi la pollution.

On atteint les objets de l'invention en utilisant un emballage débiteur de produit photosensible en bande enroulé sur un mandrin comprenant d'une part une enveloppe qui est étanche à la lumière, qui sert à protéger le produit et qui présente une fente, pour laisser sortir ledit produit de ladite enveloppe et d'autre part une broche, emballage caractérisé en ce que la broche est susceptible de supporter aux moins deux mandrins et présente un nombre de portions de verrouillage au moins égal au nombre de mandrins disposables sur cette broche et des moyens de verrouillage accessibles de l'extérieur de ladite enveloppe pour, à volonté, immobiliser ou libérer, au moins en rotation chacun desdits mandrins indépendamment l'un de l'autre, afin de permettre l'extraction dudit produit en bande par ladite fente.

D'autres avantages apparaîtront à la lecture de la description qui suit faite en référence au dessin annexé dans lequel :

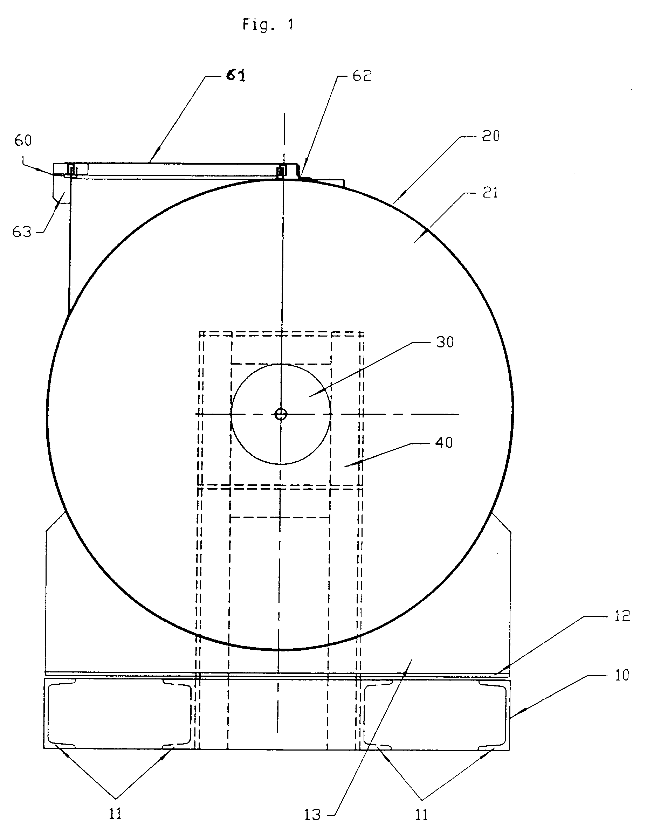

la Fig. 1 représente une vue de profil d'un mode de réalisation d'un emballage suivant l'invention, la face frontale ou couvercle ayant été enlevée ;
la Fig. 2 représente une vue de face d'un mode de réalisation d'un emballage suivant l'invention, certaines parties ayant été arrachées pour permettre une meilleure compréhension de l'invention ;
la Fig. 3 représente une vue en coupe suivant la ligne 3-3 de la Fig. 2 dans laquelle le patin de freinage est en position active ;
la Fig. 4 représente une vue en coupe suivant la ligne 4-4 de la Fig. 2 dans laquelle le patin de freinage est en position de repos.

L'emballage suivant l'invention reprend les fonctionnalités exposées dans la demande de brevet français 9001858 déposée le 12 février 1990 et on pourra s'y reporter pour mieux comprendre les buts et avantages de l'invention. L'emballage comprend donc un socle 10 adapté à la manutention par chariot élévateur, une enveloppe 20 rigide destinée à protéger le produit en bande et une broche 30 fixée en porte à faux sur le socle 10 par l'intermédiaire d'un bâti 40.

Dans un mode de réalisation particulier, le socle 10 est constitué de quatre profilés 11 séparés les uns des autres de manière à ménager l'espace nécessaire au passage des fourches d'un chariot élévateur. Les profilés sont reliés entre eux par une plaque supérieure 12 à laquelle ils peuvent être vissés ou soudés. La plaque 12 porte des nervures 13 permettant de soutenir et maintenir en position l'enveloppe 20.

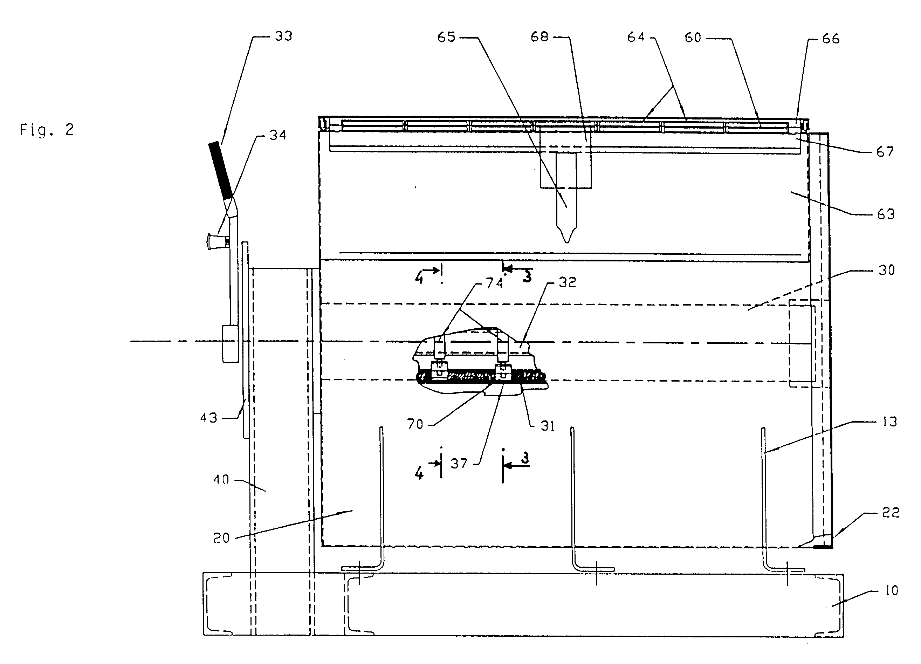

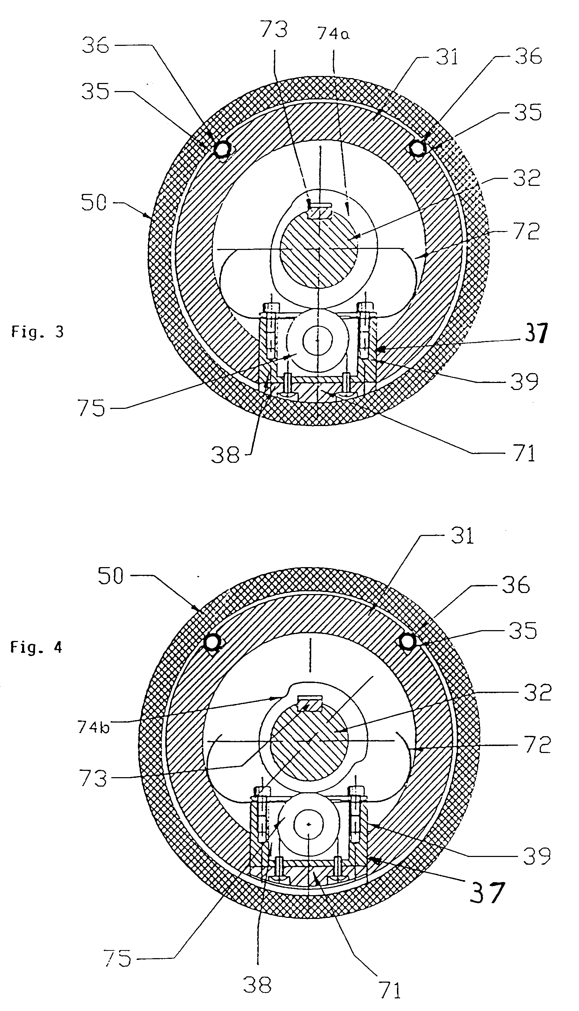

Le bâti 40, dans un mode de réalisation, peut être constitué de cornières 41 et de plaques 42 soudées entre elles de manière à maintenir la broche 30 en porte à faux. La broche 30 que l'on décrira plus en détail par la suite comprend essentiellement un tube 31 (Fig. 2) destiné à recevoir les bandes enroulées sur des mandrins 50 (Fig. 3 et 4). On dispose, à l'intérieur du tube 31, un arbre 32 pouvant tourner autour de son axe. L'arbre 32 fait saillie à l'extérieur du bâti 40 et son extrémité est munie d'un levier de positionnement 33 permettant de le faire tourner. Le levier 33 est muni d'un dispositif d'indexage 34 coopérant avec une plaque d'indexation 43 solidaire du bâti 40 et pour lequel on indiquera l'utilisation ultérieurement.

L'enveloppe 20 présente une partie récipient 21 de forme pratiquement cylindrique fermée par un couvercle 22. Le couvercle, lorsqu'il est enlevé libère l'extrémité de la broche non reliée au bâti 40 de manière à permettre l'introduction des rouleaux de produit en bande coupés et enroulés par la machine de fabrication. Avantageusement, le couvercle pourra être maintenue en position par fixation sur l'extrémité de la broche. De plus, l'enveloppe 20 peut présenter au niveau du couvercle 22 un emboîtement à gorge ou chicane permettant de conserver à l'emballage une étanchéité à la lumière.

L'emballage suivant un mode de réalisation comprend une fente 60 étanche à la lumière permettant d'extraire le produit en bande de l'intérieur de l'enveloppe 20. Suivant un mode de réalisation la fente est définie par un moyen permettant d'accroître de façon notable la dimension transversale de cette fente. Dans le mode de réalisation représenté, la partie supérieure 61 délimitant la fente est articulée grace à une charnière 62. De cette manière, par basculement de la partie supérieure 61 on peut accéder facilement aux bandes disposées sur la broche 30. Il est évident que cette opération se fait en fabrication dans un local totalement obscurcit afin de ne pas voiler le produit photosensible. On augmente la dimension de la fente par basculement de la partie supérieure, on extrait un bout de bande 68 que l'on fixe sur la partie avant 63 de l'enveloppe par exemple au moyen d'une bande adhésive 65 et l'on répète cette opération pour toutes les bandes situées sur la broche, puis l'on referme la partie supérieure et l'on dispose l'arbre dans une position, décrite par la suite, qui permet d'immobiliser tous les noyaux situés sur la broche 30. Il est évident que la charnière 62 et la partie supérieure 61 délimitant la fente 60 comprennent des chicanes analogues à celles décrites dans la demande de brevet français 9001858 déjà citée. La fente est délimitée par une lèvre supérieures 66 portée par la partie supérieure 61 et une lèvre inférieure 67 supportée par la partie avant 63.

Comme on le voit sur la Fig. 2, la face avant des lèvres délimitant la fente 60 est pourvue de gorges 64 entourant chaque bande. Pour la simplification du dessin, sur la Fig. 2, on a représenté une seule bande sortant par la fente 60 et attachée sur la partie avant 63 au moyen d'une bande adhésive 65. Les gorges 64 permettent l'introduction d'une partie complémentaire du dispositif d'utilisation (non représentée) ce qui fournit une jonction possible étanche à la lumière entre l'emballage suivant l'invention et le dispositif d'utilisation disposé en aval.

L'étanchéité entre la lèvre supérieure 66 et la lèvre inférieure 67 est améliorée par l'application sur les surfaces en regard des lèvres supérieure et inférieure d'un complexe mousse jersey vendu par les Etablissements Gergonne à Oyonnax, France.

Comme indiqué dans la demande de brevet français 9001858, on a besoin d'immobiliser les rouleaux pendant le transport. Toutefois, l'immobilisation est aussi nécessaire lorsqu'on extrait une bande afin de ne pas dérouler la ou les bandes adjacentes. On se reportera maintenant aux fig. 3 et 4 qui représentent en coupe la broche de l'emballage suivant l'invention. La broche 30 comprend un tube 31 creux sur lequel on dispose les rouleaux de produit en bande enroulés sur des mandrins 50. La broche présente un diamètre extérieure un peu inférieur au diamètre intérieur des mandrins. Pour diminuer les forces de frottements du mandrin sur le tube 31 on réalise deux rainures 35 dans le tube 31 et on dispose à l'intérieur de chacune de ces rainures une tige 36 cylindrique, par exemple en "supragliss" vendu par Est Acier, St-Rémy, France.

La broche 30 est munie d'un moyen de verrouillage permettant dans une première condition le coulissement des mandrins sur cette broche et dans une autre condition l'immobilisation desdits mandrins sur cette broche. Pour permettre de libérer en rotation un des rouleaux tout en maintenant les autres rouleaux immobilisés, la broche présente des portions de verrouillage 70 en nombre égal au nombre de mandrins disposés sur cette broche. Les Fig. 3 et 4 représentent la section de la broche 30 au niveau de deux portions de verrouillage distinctes.

Comme on le voit sur ces figures, le tube 31 comporte au niveau de chaque zone de verrouillage une ouverture 37 dans laquelle on introduit un patin de freinage. Comme on le voit sur les Fig. 3 et 4, le patin 38 peut coulisser librement dans l'ouverture 37. Le patin est constitué d'une pièce 39 en forme de U sur lequel on a fixé par tout moyen approprié un patin de caoutchouc 71. Le patin est sollicité, au repos vers l'intérieur de la broche par un moyen élastique tel qu'un ressort 72.

Le moyen de verrouillage, mentionné précédemment, est constitué du patin 38 et d'un moyen de mise en oeuvre de ce patin qui comprend l'arbre 32 sur lequel on a fixé des cames 74a, 74b, par exemple par des clavettes 73. Le patin 38 est muni d'un galet suiveur 75 sollicité par le ressort 72 pour venir au contact de la came 74a, 74b. De cette manière la rotation de l'arbre 32 entraîne une rotation correspondante des cames 74a et 74b qui immobilisent les mandrins et interdit le déroulement de la bande portée par ce mandrin ou les libèrent permettant l'extraction de la bande correspondante.

Comme on l'a déjà mentionné, l'arbre 32 peut prendre, grâce au dispositif d'indexage 34, des positions stables en nombre au moins égal au nombre des portions de verrouillage 70 plus une. L'une correspond au verrouillage de toutes les bandes, les autres libèrant les bandes. Il est évident que chaque basculement de l'arbre d'une position stable à une autre position stable peut libérer un mandrin déterminé et immobiliser tous les autres. Toutefois, on a trouvé qu'il est préférable de libérer les mandrins progressivement d'une extrémité vers l'autre extrémité et le basculement d'une position stable à la position suivante n'immobilise pas à nouveau le mandrin précédent. En effet, lors de l'utilisation de l'emballage suivant l'invention, on consomme la totalité d'une bande avant d'utiliser la bande suivante et il n'y a plus besoin d'immobiliser le mandrin correspondant, ce qui a pour effet de limiter les frottements et le couple nécessaire à l'extraction des bandes.

Dans une utilisation préférée de l'invention, l'emballage suivant l'invention contient des bandes de papier photosensible servant à alimenter une tireuse. On dispose donc la première bande de l'emballage en regard de l'orifice d'alimentation de la tireuse, après déverrouillage d'une bande on alimente la tireuse puis lorsque la bande est totalement consommée on déplace l'emballage pour disposer une autre bande en regard de l'orifice d'alimentation. Il pourra donc être avantageux de disposer sur l'emballage des moyens de repérage permettant un décalage facile et précis correspondant à la distance entre les axes et des bandes.

## Revendications

1. Emballage débiteur de produit photosensible en bande enroulé sur un mandrin (50) comprenant d'une part une enveloppe (20) qui est étanche à la lumière, qui sert à protéger le produit et qui présente une fente (60), pour laisser sortir ledit produit de ladite enveloppe et d'autre part une broche (30), emballage caractérisé en ce que la broche (30) est susceptible de supporter au moins deux mandrins (50) et présente un nombre de portions de verrouillage (70) au moins égal au nombre de mandrins disposables sur cette broche et des moyens de verrouillage (32, 39, 71, 74) accessibles de l'extérieur de ladite enveloppe pour, à volonté, immobiliser ou libérer, au moins en rotation chacun desdits mandrins indépendamment l'un de l'autre, afin de permettre l'extraction dudit produit en bande par ladite fente.

2. Emballage selon la revendication 1, dans lequel la broche est constituée d'une part d'un tube creux (31) présentant des ouvertures (37) en nombre égal au nombre de portions de verrouillage et dans lesquelles coulissent des patins de freinage (39, 71) sollicités vers l'intérieur du tube et d'autre part d'un arbre (32) susceptible de prendre des positions stables en nombre au moins égal au nombre de portions de verrouillage plus une et portant des cames (74a, 74b) coopérant avec les patins pour solliciter les patins vers l'extérieur du tube en fonction des positions stables prises par l'arbre.

3. Emballage selon la revendication 1, dans lequel la broche est maintenue en porte à faux par une des extrémités et que l'autre extrémité sert à fixer une paroi d'extrémité de l'enveloppe afin de pouvoir faire coulisser sur la broche les divers mandrins, mandrin sur lequel est enroulé le produit en bande.

4. Emballage selon la revendication 1 dans lequel la fente présente un moyen (61, 62) permettant d'accroître de façon notable la dimension transversale de cette fente afin de fournir une ouverture pour accéder à l'extrémité libre de chaque rouleau de produit en bande en vue d'extraire cette extrémité libre par ladite fente.

5. Emballage selon la revendication 4 dans lequel la fente est munie d'un moyen d'étanchéité à la lumière (64) susceptible de coopérer avec un moyen complémentaire porté par le dispositif d'utilisation aval.

## Patentansprüche

1. Ausziehpackung für auf Wickelkerne (50) gewickeltes lichtempfindliches Bandmaterial mit einem lichtdichten Gehäuse zum Schutz des Materials, einem in dem Gehäuse amgeordneten Schlitz (60) für das Bandmaterial und einem Dorn (30), **dadurch gekennzeichnet, daß** der Dorn (30) zur Aufnahme mindestens zweier Wickelkerne (50) dient und eine Anzahl von Blockierabschnitten umfaßt, die mindestens jener der auf den Dorn aufbringbaren Wickelkerne (50) entspricht, daß der Dorn Blockiermittel aufweist, die von außerhalb des Gehäuses (20) betätigbar sind, um die Wickelkerne unabhängig voneinander zu blockieren oder freizugeben, damit das Bandmaterial durch den Schlitz (60) herausziehbar ist.

2. Ausziehpackung nach Anspruch 1, dadurch gekennzeichnet, daß der Dorn (30) aus einem mit Öffnungen versehenen Rohr besteht, das mit Öffnungen (37) versehen ist, deren Anzahl der Anzahl an Blockierabschnitten entspricht und in denen in Richtung der Rohrachse vorgespannte Bremsblöcke gleiten, daß der Dorn eine mehrfach rastbare Welle umfaßt, wobei die Anzahl der Raststellungen mindestens der Anzahl der Blokkierabschnitte plus einer weiteren Raststellung entspricht, und daß am Wellenumfang Kurvenabschnitte (74a, 74b) vorgesehen sind, die mit den Bremsblöcken zusammenwirken, um diese in Abhängigkeit von den von der Welle eingenommenen Raststellungen wahlweise in Richtung der Rohrinnenwandung zu bewegen.

3. Ausziehpackung nach Anspruch 1, dadurch gekennzeichnet, daß der Dorn mit seinem einen Ende an einer Gehäusewand befestigt und sein anderes Ende frei zugänglich ist, um die das Bandmaterial tragenden Wickelkerne auf den Dorn aufzubringen.

4. Ausziehpackung nach Anspruch 1, dadurch gekennzeichnet, daß der Schlitz mit einer Einrichtung (61, 62) zum Vergrößern seiner Querausdehnung versehen ist, derart, daß eine Öffnung entsteht, die einen Zugriff auf das Bandmaterial ermöglicht.

5. Ausziehpackung nach Anspruch 4, dadurch gekennzeichnet, daß der Schlitz eine lichtabdichtende Einrichtung (64) aufweist, die zum Zusammenwirken mit einer an der Verwendungsvorrichtung angeordneten Einrichtung ausgebildet ist.

## Claims

1. Packaging for delivering a photosensitive web product wound round a tube expander consisting on the one hand of a light-tight housing which serves to protect the product and which is fitted with a slot to allow such product to be pulled out from such housing and, on the other hand, a spindle, such packaging being characteristic in that the spindle is likely to support two tube expanders at least and shows a number of locking areas at least equal to that of the tube expanders which could be set on this spindle and locking means accessible from the outside of said housing, to optionally immobilize or release, at least in rotation, each of said tube expanders, independently from one another, so as to allow such web product to be pulled out through such slot.

2. Packaging according to claim 1, in which the spindle consists, on the one hand, of a hollow tube fitted with openings in a quantity at least equal to that of the locking areas and through which the braking shoes that are pulled back toward the inside of the tube, slide, and, on the other hand, of a shaft likely to adopt stable positions of which quantity is at least equal to that of the locking areas plus one, and which is fitted with cams participating with the shoes to pull the shoes back toward the outside of the tube as a function of the stable positions adopted by the shaft.

3. Packaging according to claim 1, in which the spindle is held overhanging from one of its ends while the other end serves to fix an end wall of the housing in order to permit the sliding of tube expanders, round which the web product is wound, on the spindle.

4. Packaging according to claim 1, in which the slot is fitted with a means allowing the transverse dimension of such slot to be substantially increased so as to provide an opening to have access to the web product.

5. Packaging according to claim 4, in which the slot is fitted with a means allowing it to be light-tight and likely to participate with a complementary means resting upon the downstream utilization device.
